(19) 

Europäisches Patentamt

European Patent Office

Office européen des brevets

(11) **EP 4 122 654 B1**

(12) **EUROPEAN PATENT SPECIFICATION**

(45) Date of publication and mention of the grant of the patent:
**29.04.2026 Bulletin 2026/18**

(21) Application number: **20928458.7**

(22) Date of filing: **31.03.2020**

(51) International Patent Classification (IPC):
**B25J 9/16** $^{(2006.01)}$    **G05B 19/418** $^{(2006.01)}$

(52) Cooperative Patent Classification (CPC):
**G05B 19/41885; B25J 9/1671; G05B 2219/31342**

(86) International application number:
**PCT/CN2020/082459**

(87) International publication number:
**WO 2021/195970 (07.10.2021 Gazette 2021/40)**

(54) **PREDICTION MODEL LEARNING METHOD, APPARATUS AND SYSTEM FOR AN INDUSTRIAL SYSTEM**

VORHERSAGEMODELLLERNVERFAHREN, -VORRICHTUNG UND -SYSTEM FÜR EIN INDUSTRIESYSTEM

PROCÉDÉ, APPAREIL ET SYSTÈME D'APPRENTISSAGE DE MODÈLE DE PRÉDICTION POUR UN SYSTÈME INDUSTRIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.01.2023 Bulletin 2023/04**

(73) Proprietor: **Siemens Aktiengesellschaft**
**80333 München (DE)**

(72) Inventors:
 • **LI, Jing**
  **Shanghai 201208 (CN)**

 • **XU, Wei Feng**
  **Shanghai 200940 (CN)**
 • **LI, Ming**
  **Shanghai 201204 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
WO-A1-2017/201023     CN-A- 109 800 864
CN-A- 110 450 153     CN-A- 110 647 354
US-A1- 2019 084 151     US-A1- 2019 303 755

**Description**

**Technical Field**

The present invention relates to the industrial automation field, in particular to a prediction model learning method, medium and system for an industrial system.

**Background Art**

CN 109 800 864 A relates to a learning method for robots based on image input aimed at overcoming the limitations of data collection in real-world environments.

More and more complicated systems, for example, intelligent robots and automatic driving systems, have been applied in the industrial field. Predicting the performance of those complicated systems allows users to take positive action, for example, change system parameters when it is necessary to meet the performance requirement.

However, it is not easy to predict the performance of complicated systems. One way is to evaluate the system performance through a simulation. A plurality of scenarios are produced and tests are performed during simulations so as to produce a large amount of simulation results for performing an evaluation. However, it will take a lot of simulation execution time to explore the design space (for example, parameter debugging) of a target system. In addition, it will take man-labor and time to establish and perform simulations in a scenario. Therefore, a typical simulation platform helps to test and evaluate a complicated system, but is not suitable for predicting the system performance online.

Therefore, establishing a prediction model for a complicated industrial system based on real data is a better solution. However, it is very expensive and sometimes impossible to collect real data of all subsystems of a complicated industrial system.

To solve the above-mentioned problem, a solution in the prior art is to use the machine learning method to establish training data for refreshing the manipulator, select a prediction model template from a database and debug data based on refreshed data to optimize the prediction model. However, that solution depends on the analysis of the collected real data, instead of the simulation mechanism. In addition, a prediction template base is required and a template is refined through additional training. The predicted target in that solution is associated with the business, especially the sales volume.

A further solution in the prior art is to evaluate the credibility. The solution provides the complete application of a grey prediction model to qualitatively and quantitatively discover the inherent law of a complicated simulation system from limited test data so as to improve the credibility evaluation of the complicated system. The effect of that solution is only limited to the credibility, instead of the performance metrics.

Yet a further solution is proposed in the prior art. In order to control the parameter debugging mechanism, the parameter optimization is controlled based on simulations. The model error problem is solved and a control parameter adjustment with a higher accuracy can be identified. However, that solution is not for a complicated system, nor based on simulations. In addition, that solution is limited to only servo motors and parameter debugging controllers.

Still a further solution in the prior is a neural network robot trained in a simulation environment. The neural network robot collects comprehensive presentation statistics (bin) from an algorithm supervisor in a pybullet simulator, and then learns the policies of the neural network through the comprehensive data acquired from the simulator. The neural network robot controller is also trained based on the trajectory data acquired from the simulator. However, that solution is useful for an intelligent robot system and collected simulation data. The key point of the solution lies in training a robot controller, instead of enhancing the simulator for a complicated system and the simulator to obtain a prediction model generator.

**Summary of the Invention**

In a first aspect, the present invention provides a prediction model learning method, wherein a simulation is performed for the industrial system according to a simulation task on a platform. The prediction model learning method for an industrial system comprises the following steps: S1, using statistical metrics to quantify a simulation task of the industrial system so as to extract features of the simulation task; S2, extracting parameter groups from system modules of the industrial system which performs a simulation, adjusting the values of the parameter groups, and triggering a simulation for the industrial system on the simulation platform based on a plurality of parameter groups having different values; S3, recording performance metrics according to the values of the parameter groups after the parameter adjustment; S4, training data by use of a machine learning algorithm based on the features of the simulation task, the corresponding parameter groups having different values and the performance metrics, and generating a prediction model.

Further, step S2 comprises the following steps: S21, extracting parameter groups from system modules of the industrial system which performs a simulation, and marking adjustable parameter groups; S22, adjusting the values of the adjustable parameter groups according to the corresponding adjustable range of each adjustable parameter group, and triggering a simulation for the industrial system on the simulation platform based on a plurality of parameter groups having different values; S23, synchronizing and recording the combination and values of the parameter groups after the parameter adjustment.

Further, step S3 comprises the following steps: S31, recording performance metrics according to the values of the parameter groups after the parameter adjustment; S32, recording the values of the performance metrics based on the recorded performance metrics and the simulation result which correspond to each other. Further, the performance metrics are key performance indexes or are determined based on the customer requirements.

Further, after step S4, the method further comprises the following step: querying the prediction model based on the features of the input simulation task and the values of the parameter groups to obtain the values of the performance metrics. Further, the industrial system is a context-aware robot, wherein the features of the simulation task include a plurality of metrics of a red-green-blue-depth (RGBD) image, and the metrics include one or more of the following: image resolution, target scale in image, and object mean.

Further, the context-aware robot is a grasping robot and the system modules thereof include: a vision module, configured to process an input RGBD image, a path planning module, configured to figure out the path along which the manipulator moves to a grasping point according to the grasping point obtained through image recognition, and an action control module, configured to control the movement of the manipulator according to the path planned by the path planning module.

In a second aspect, the present invention provides a prediction model learning apparatus for an industrial system, wherein a simulation is performed for the industrial system according to a simulation task on a platform. The prediction model learning apparatus for an industrial system comprises: a task feature management unit, configured to use statistical metrics to quantify a simulation task of the industrial system so as to extract features of the simulation task, a parameter adjustment management unit, configured to extract parameter groups from system modules of the industrial system which performs a simulation, adjust the values of the parameter groups, and trigger a simulation for the industrial system on the simulation platform based on a plurality of parameter groups having different values, a performance recording unit, configured to record performance metrics according to the values of the parameter groups after the parameter adjustment, a training data management unit, configured to train data by use of a machine learning algorithm based on the features of the simulation task, the corresponding parameter groups having different values and the performance metrics, and a learning management unit, configured to generate a prediction model.

Further, the parameter adjustment management unit further comprises a parameter feature group recording subunit, configured to extract parameter groups from system modules of the industrial system which performs a simulation, and mark adjustable parameter groups, a parameter adjustment subunit, configured to adjust the values of the adjustable parameter groups according to the corresponding adjustable range of each adjustable parameter group, and trigger a simulation for the industrial system on the simulation platform based on a plurality of parameter groups having different values; and a parameter recording subunit, configured to synchronize and record the combination and values of the parameter groups after the parameter adjustment.

Further, the performance recording unit further comprises a performance registration sub-unit, configured to record performance metrics according to the values of the parameter groups after the parameter adjustment, and a performance recording subunit, configured to record the values of the performance metrics based on the recorded performance metrics and the simulation result which correspond to each other.

Further, the performance metrics are key performance indexes or are determined based on customer requirements.

Further, the learning management unit is configured to query the prediction model based on the features of the input simulation task and the values of the parameter groups to obtain the values of the performance metrics.

In a third aspect, the present invention provides a prediction model learning system for an industrial system. The prediction model learning system for an industrial system comprises a processor and a memory coupled with the processor, the memory has instructions stored therein, the instructions allow the prediction model learning system for an industrial system to perform actions when executed by the processor, and the actions include: S1, using statistical metrics to quantify a simulation task of the industrial system so as to extract features of the simulation task; S2, extracting parameter groups from system modules of the industrial system which performs a simulation, adjusting the values of the parameter groups, and triggering a simulation for the industrial system on the simulation platform based on a plurality of parameter groups having different values; S3, recording performance metrics according to the values of the parameter groups after the parameter adjustment; S4, training data by use of a machine learning algorithm based on the features of the simulation task, the corresponding parameter groups having different values and the performance metrics, and generating a prediction model.

Further, action S2 further comprises: S21, extracting parameter groups from system modules of the industrial system which performs a simulation, and marking adjustable parameter groups; S22, adjusting the values of the adjustable parameter groups according to the corresponding adjustable range of each adjustable parameter group, and triggering a simulation for the industrial system on the simulation platform based on a plurality of parameter groups having different values; S23, synchronizing and recording the combination and values of the parameter groups after the parameter adjustment.

Further, action S3 comprises: S31, recording performance metrics according to the values of the parameter groups after the parameter adjustment; S32, recording the values of the performance metrics based on the recorded performance metrics and the simulation result which correspond to each other.

Further, the actions after action S4 include: querying the prediction model based on the features of the input simulation task and the values of the parameter groups to obtain the values of the performance metrics.

In a fourth aspect, the present invention provides a computer program product, the computer program product is tangibly stored in a computer-readable medium and comprises computer-executable instructions, and the computer-executable instructions allow at least one processor to execute the method according to the first aspect of the present invention when executed.

In a fifth aspect, the present invention provides a computer-readable medium, computer-executable instructions are stored in the computer-readable medium, and the computer-executable instructions allow at least one processor to execute the method according to the first aspect of the present invention when executed.

Data in the simulation task is used to train and build a prediction model in the present invention. The step of adjusting parameters in the present invention is a systematic and automatic step, allowing a simulation to produce a large amount of various parameters for data training. Parameter adjustments are often manually completed in the prior art, however. Therefore, those system parameters can be structurally explored and tested, avoiding incomplete considerations in manual parameter adjustment mode.

By use of the present invention, simulation data can be converted into an online prediction model, which can direct a user to dynamically and more efficiently select a parameter combination and values for a complicated system. When a simulation is performed for an industrial system, the present invention may simultaneously help a customer to establish an online prediction system. The present invention allows industrial customers to online predict the performance of their systems and dynamically adjust parameters.

## Brief Description of the Drawings

Fig. 1 shows the structure of the prediction model learning system for an industrial system according to one specific embodiment of the present invention.
Fig. 2 shows a scenario where a grasping robot grasps parts from a box.
Fig. 3 shows the structure of the parameter adjustment management unit of the prediction model learning system for an industrial system according to one specific embodiment of the present invention.
Fig. 4 is a logic diagram of parameter adjustments of the prediction model learning mechanism for an industrial system according to one specific embodiment of the present invention.
Fig. 5 shows the structure of the performance recording unit of the prediction model learning system for an industrial system according to one specific embodiment of the present invention.
Fig. 6 is a schematic diagram of the decision tree C5.0 of the prediction model learning mechanism for an industrial system according to one specific embodiment of the present invention.

## Particular Embodiments

The following will describe specific embodiments of the present invention in combination with the drawings.

The present invention, an extension of the prior simulation platform, can automatically search parameter groups of a complicated system which needs to be simulated, and record major simulation data to learn a latent prediction model for a target industrial system. During a simulation, the present invention records data of interest for each system module, builds a scenario and a feature group of adjusted parameters, and finally applies equipment for sampling to generate a prediction model for a simulated system. By using the prediction model, a user can quickly predict the performance of a complicated system based on a specific scenario and parameters and optimize the system through automatic selections of system parameters, wherein the prediction model is utilized to meet the performance requirement during the automatic selection of system parameters. When the performance of a target system is simulated, the present invention can help customers to establish an online prediction system for their complicated systems. Wherein, the target system includes an intelligent robot system, a manufacturing unit or a production line. The present invention can allow customers to online predict the performance of their systems and automatically adjust parameters. The present invention can be applied to a large number of neighbors, especially complicated industrial systems, including industrial context-aware manufacturing system, for example, autonomous equipment, workstations and workshops. The present invention is applicable to context-aware devices, for example, the fields of automatic driving, intelligent robots and drones.

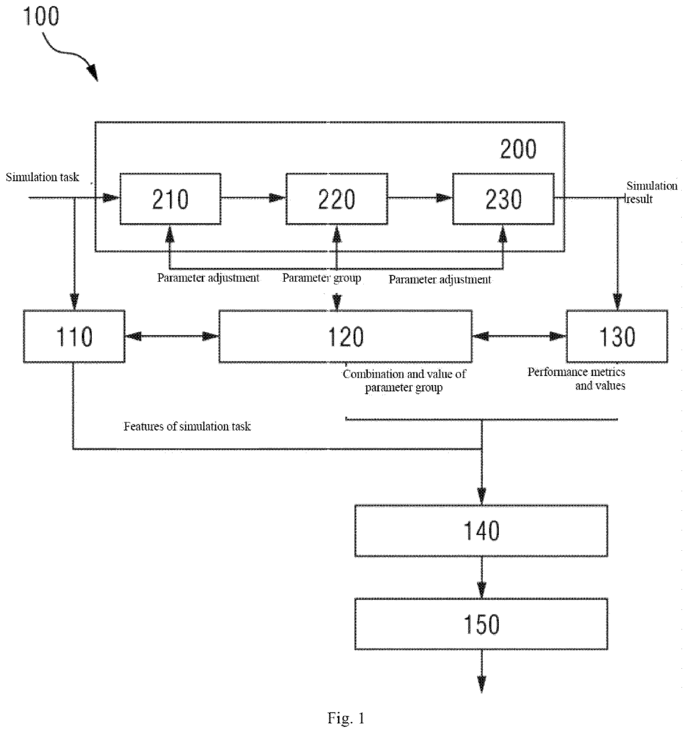

The present invention provides a mechanism for automatically learning a prediction model from a simulation and the present invention is an extension of the function of the simulation platform into online model building. The present invention can be easily integrated into a prior simulator. Fig. 1 shows the structure of the prediction model learning system for an industrial system according to one specific embodiment of the present invention. Specifically, the prediction model learning system 100 for an industrial system comprises a task feature management unit 110, a parameter adjustment management unit 120, a performance recording unit 130, a training data management unit 140 and a learning management unit 150. The prediction model learning system 100 for an industrial system provided by the present invention is a function extension of the prior simulation platform 200. A simulation task is input into the simulation platform 200 and a simulation result is output.

The present invention is described in combination with an embodiment where a simulation is performed for a grasping robot serving as an industrial system. In the first aspect, the present invention provides a prediction model learning method for an industrial system and the method comprises the following steps: Step S1 is first performed. The task feature management unit 110 uses statistical metrics to quantify the simulation task of the industrial system so as to extract features of the simulation task. Specifically, the task feature management unit 110 is configured to manage and load the features of the simulation task, namely, use statistical metrics to quantify the features of the input simulation task and provide feature data of the simulation task for the training data management unit 140 after the simulation.

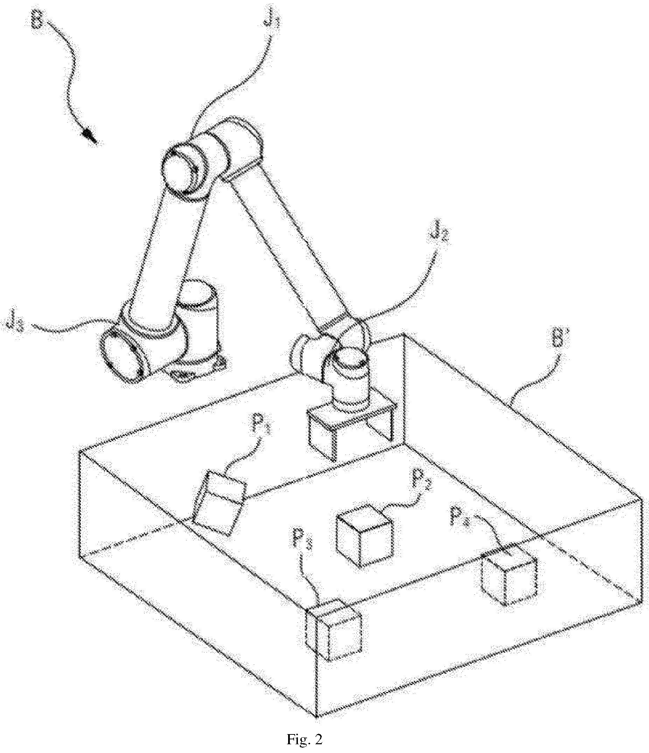

As shown in Fig. 2, according to a specific embodiment of the present invention, what needs to simulated is the process that an industrial system, which is a grasping robot, grasps a plurality of parts from a box B'. The grasping robot B moves a first joint $j_1$, a second joint $j_2$ and a third joint $j_3$ according to a planned path so as to grasp a plurality of parts from the box B', and the plurality of parts include a first part $p_1$, a second part $p_2$ and a third part $p_3$, for example.

As shown in Fig. 1, the simulation platform 200 simulates the above-mentioned process of the grasping robot B, wherein the simulation platform 200 comprises a plurality of system modules of the grasping robot B, including a vision module 210, a path planning module 220 and an action control module 230. In the present embodiment, an image, especially, an RGBD image, is input into the simulation platform 200. The vision module 210 processes an input RGBD image, the path planning module 220 figures out the path along which the manipulator moves to a grasping point according to the grasping point obtained through image recognition, and the action control module 230 controls the movement of the manipulator according to the path planned by the path planning module 220.

Specifically, image data is input into the task feature management unit 110 and the simulation task calculated by the task feature management unit is a statistical metric group of image data. The metrics and features can be predefined in the task feature management unit 110 and the task feature management unit can extract the features of a simulation required to be performed in an input simulation task. For example, in the present embodiment, the grasping robot B is a context-aware robot, and the features of the simulation task is a plurality of metrics of a series of RGBD images, wherein one metric is a feature vector I:

I=[image resolution, target scale in image, object mean]

The above-mentioned feature values can be figured out from task data based on each specific simulation execution and stipulated by the simulation platform. The values of the task feature data are synchronized by the parameter adjustment management unit 120 with the metrics and are saved as a part of a training data set later.

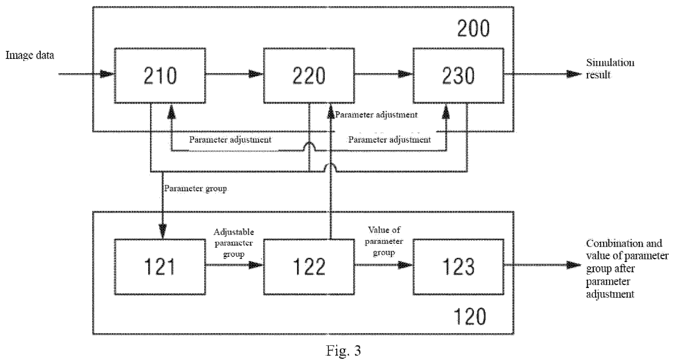

Then step S2 is performed. The parameter adjustment management unit 120 extracts parameter groups from system modules of the industrial system which performs a simulation, adjusts the values of the parameter groups, and triggers a simulation for the industrial system on the simulation platform based on a plurality of parameter groups having different values 200. Step S2 comprises three sub-steps: S21, S22 and S23. As shown in Fig. 3, the parameter adjustment management unit 120 consists of three subunits, which are a parameter feature group recording subunit 121, a parameter adjustment subunit 122 and a parameter recording subunit 123, respectively. In addition, the parameter adjustment management unit 120 is further configured to automatically record parameters for a plurality of system modules and the parameter adjustment management unit can systematically produce simulation data for the learning management unit 150.

In sub-step S21, the feature group recording subunit 121 extracts parameter groups from system modules of the industrial system which performs a simulation, and marks adjustable parameter groups. The feature group recording subunit 121 sends the adjustable parameter groups to the parameter adjustment subunit 122.

According to a specific embodiment of the present invention, the parameter feature group recording subunit 121 collects adjustable parameter groups from each system module, namely, collects adjustable parameter groups from the vision module 210, the path planning module 220 and the action control module 230. The above-mentioned parameters may be marked with "adjustable". Then, those adjustable parameters and the adjustable ranges are also sent to the parameter adjustment subunit 122 of the parameter adjustment management unit 120 for a subsequent analysis. The parameter feature group recording subunit 121 outputs parameter feature values.

In the present embodiment, among the input parameter groups, the adjustable parameter groups marked by the parameter feature group recording subunit 121 include:

$$\text{Perception} = \begin{bmatrix} \overrightarrow{x_1} \\ \overrightarrow{x_2} \\ \overrightarrow{x_3} \end{bmatrix} = \begin{bmatrix} x_{1min} & x_{1max} \\ x_{2min} & x_{2max} \\ x_{3min} & x_{3max} \end{bmatrix};$$

$$\text{Path Planner} = \begin{bmatrix} \overrightarrow{y_1} \\ \overrightarrow{y_2} \end{bmatrix} = \begin{bmatrix} y_{11} & y_{12} & y_{13} \\ y_{21} & y_{22} & y_{23} \end{bmatrix};$$

$$\text{Motion Controller} = \begin{bmatrix} \overrightarrow{z_1} \\ \overrightarrow{z_2} \end{bmatrix} = \begin{bmatrix} z_{1min} & z_{1max} \\ z_{2min} & z_{2max} \end{bmatrix},$$

wherein, Perception is an adjustable parameter group extracted from the vision module 210, Path Planner is an adjustable parameter group extracted from the path planning module 220, and Motion Controller is an adjustable parameter group extracted from the action control module 230. Wherein, the adjustable parameter group perception extracted from the vision module 210 comprises $x_1$, $x_2$ and $x_3$, and $x_1$, $x_2$ and $x_3$ have a value range from $x_{1min}$ to $x_{1max}$, a value range from $x_{2min}$ to $x_{2max}$, and a value range from $x_{3min}$ to $x_{3max}$, respectively. For example, the LINEMOD algorithm is used for the parameter feature group recording subunit 121, $x_1$ is the similarity of templates, $x_2$ is the non-maximum suppression, and $x_3$ is the contrast ratio. The adjustable parameter group Path Planner extracted from the path planning module 220 comprises $y_1$ and $y_2$, and $y_1$ and $y_2$ have discrete values defined as $y_{11}$, $y_{12}$ and $y_{13}$, and $y_{21}$, $y_{22}$ and $y_{23}$, respectively. Wherein, $y_1$ and $y_2$ are parameters in terms of route selection and comprise a start point and path points. In addition, the adjustable parameter group Motion Controller extracted from the action control module 230 comprises $z_1$ and $z_2$, which represent the endpoint velocity and the acceleration of the grasping robot B, respectively, and $z_1$ and $z_2$ may be continuous variables or discrete values.

In sub-step S22, the parameter adjustment subunit 122 adjusts the values of the adjustable parameter groups according to the corresponding adjustable range of each adjustable parameter group, and trigger a simulation for the industrial system on the simulation platform based on a plurality of parameter groups having different values 200. The parameter adjustment subunit 122 sends the values of the parameter groups to the parameter recording subunit 123. The parameter adjustment subunit 122 is configured to systematically and automatically select parameter feature values from parameter feature groups, then adjust parameters, push the parameters after the parameter adjustment to the simulation platform 200, and trigger a simulation for the target industrial system to perform corresponding tests for the selected features in the simulation. Based on application requirements and customer requirements, a plurality of policies are applied to a parameter adjustment. One policy is that a combination of all possible values in the feature group is used for a parameter adjustment, and another policy is that variable values are selected according to a specific distribution, for example, normal distribution.

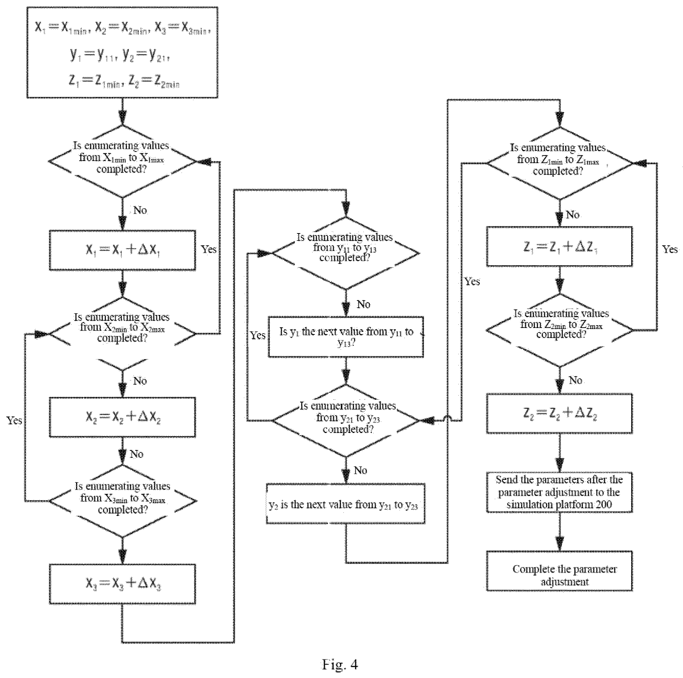

Fig. 4 is a logic diagram of parameter adjustments of the prediction model learning mechanism for an industrial system according to one specific embodiment of the present invention. As shown in Fig. 4, the logic sequence of parameter adjustments is basically as follows: first adjust the parameter x, then adjust the parameter y, and finally adjust the parameter z. Specifically, the initial states of the above-mentioned parameters include:

$x_1 = x_{1min}$, $x_2 = x_{2min}$, $x_3 = x_{3min}$,

$y_1 = y_{11}$, $y_2 = y_{21}$,

$z_1 = z_{1min}$, $z_2 = z_{2min}$,

Then determine whether enumerating values from $x_{1min}$ to $x_{1max}$ is completed. If no, continue to enumerate values according to $x_1 = x_1 + \Delta x_1$. Determine whether enumerating values from $x_{2min}$ to $x_{2max}$ is completed. If yes, go back to the previous step, and otherwise continue to enumerate values according to $x_2 = x_2 + \Delta x_2$. Then determine whether enumerating values from $x_{3min}$ to $x_{3max}$ is completed. If yes, go back to the previous step, and otherwise, continue to enumerate values $x_3 = x_3 + \Delta x_3$.

Then determine whether enumerating values from $y_{11}$ to $y_{13}$ is completed. If no, set $y_1$ to the next value from $y_{11}$ to $y_{13}$, then determine whether enumerating values from $y_{21}$ to $y_{23}$ is completed. If yes, go back to the previous step, and otherwise set $y_2$ to the next value from $y_{21}$ to $y_{23}$.

Finally determine whether enumerating values from $z_{1min}$ to $z_{1max}$ is completed. If no, continue to enumerate values according to $z_1 = z_1 + \Delta z_1$, and if yes, go back to the step of determining whether enumerating values from $y_{21}$ to $y_{23}$ is completed. Then determine whether enumerating values from $z_{2min}$ to $z_{2max}$ is completed. If no, continue to enumerate values according to $z_2 = z_2 + \Delta z_2$, and if yes, go back to the previous step. Then, send the parameters after the adjustment to the simulation platform 200 to complete the parameter adjustment.

Therefore, the parameters x, y and z after the completion of parameter adjustments are sent to the vision module 210, the path planning module 220 and the action control module 230, respectively.

In sub-step S23, the parameter recording subunit 123 synchronizes and records the combination and values of the parameter groups after the parameter adjustment.

Then step S3 is performed. The performance recording unit 130 records the performance metrics according to the values of the parameter groups after the parameter adjustment, wherein the performance metrics are key performance indexes (KPIs). Wherein, the performance recording unit 130 and the parameter adjustment management unit 120 cooperate with each other to record the KPIs of the industrial system and keep the KPIs consistent with each value of the parameter feature groups. The performance recording unit 130 further comprises a performance registration subunit 131 and a performance recording subunit 132. Step S3 comprises sub-step S31 and sub-step S32.

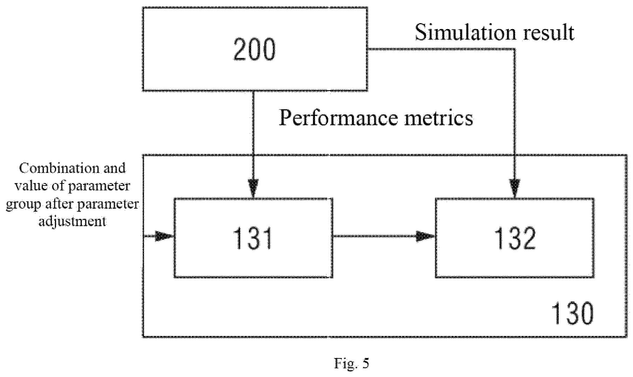

As shown in Fig. 5, the performance recording unit 130 further comprises a performance registration subunit 131 and a performance recording subunit 132.

In sub-step S31, the performance registration subunit 131 records performance metrics according to the values of the parameter groups after the parameter adjustment. The performance registration subunit 131 cooperates with the parameter adjustment management unit 120 to record KPIs according to each value of the performance feature groups. Specifically, the performance registration subunit 131 collects the performance metrics of an industrial system serving as the simulation target, and the performance metrics can be marked in the simulation platform 200. Usually, the performance metrics are related to the KPIs which customers are interested in. A plurality of metrics can be recorded in the performance recording unit 130. For example, in a context-aware robot system, the performance metric of the grasping robot B is alternatively "whether the task of grasping a part (for example, first part p1, second part p2 and third part p3) from a box is successfully completed". Therefore, the task is recorded as r in the performance registration subunit 131, and it is stipulated that the task is completed when r=1, and the task fails when r=0. Another performance metric example is alternatively time t. The time t represents the time it takes a grasping robot B to complete the whole grasping process.

In sub-step S32, the performance recording subunit 132 records the values of the performance metrics based on the recorded performance metrics and the simulation result. Wherein, the values of the performance metrics are associated with the metrics in the parameter adjustment management unit 120. The performance recording subunit needs to cooperate with the parameter adjustment management unit 120 to complete each round of data recording. Wherein, the combination and values of each parameter group correspond to a simulation result, and each simulation result also corresponds to each performance metric.

Alternatively, the performance metrics are key performance indexes or are determined based on the customer requirements.

Then, step S4 is performed to train data by use of a machine learning algorithm based on the features of the simulation task, the corresponding parameter groups having different values and the performance metrics, and generate a prediction model.

Specifically, the training data management unit 140 acquires feature data of the simulation task from the task feature management unit 110, acquires the combination and values of the parameter groups from the parameter adjustment management unit 120, and acquires performance metrics and value data from the performance recording unit 130, respectively, and prepare training data for the learning management unit 150. The training data management unit 140 is further configured to clean data and pre-process data.

In the present embodiment, the input of the training data management unit 140 is:

*[Features of simulation task, values of parameter groups, values of performance metrics]* = [*I, $x_1$, $x_2$, $x_3$, $y_1$, $y_2$, $z_1$, $z_2$, r, t*]

wherein, I is the feature of the simulation task of the grasping robot B acquired from the task feature management unit 110, namely, one feature vector of the image data of the grasping robot B. The parameter group value combination comprises $x_1$, $x_2$, $x_3$, $y_1$, $y_2$, $z_1$, $z_2$R is a performance metric matrix for different parameter group combinations and values, and r and t are weight vectors of the performance metric R.

Specifically, a simulation result and a performance metric matrix R will be obtained after a simulation is performed based on each parameter group combination and the values. For example, R is determined by two weight vectors r and t, as shown below:

$$R = w_1 r + w_2 t$$

wherein, $w_1 w_1$ and $w_2 w_2$ are the weights for measuring each performance metric, and the purpose of combining the performance metrics into one metric is to execute a machine algorithm. Therefore, training data comprises:

$$[I, x_1, \ x_2, \ x_3, \ y_1, y_2, \ z_1, z_2, R]$$

Then, the training data management unit 140 also executes the data cleaning function, for example, cleans noise of data containing missing data or error data. The training data management unit will also apply a specific standard algorithm to preprocess the data to obtain proper training data.

Next, the learning management unit 150 applies different machine learning algorithms to obtain a prediction model, namely, latent rules. Based on the rules of the prediction model, a user can predict the performance of an industrial system and optimize the parameters of the whole industrial system to keep the system more efficient. Those parameters can be searched as many as possible in a simulation.

Specifically, prior data mining and the learning algorithm, for example, decision tree C5.0 or artificial neural network (ANN), can be embedded into the learning management unit 150 so that the learning management unit can learn patterns and hinted knowledge from simulation data. Simulation data is well-marked training data, and the learning target is one rule, which can be used to obtain performance metrics for given task features and parameter group values. After obtaining such a rule, a user can quickly predict the system performance for a given scenario and given parameters, or can also utilize the prediction model to online adjust the system parameters to meet the performance requirements.

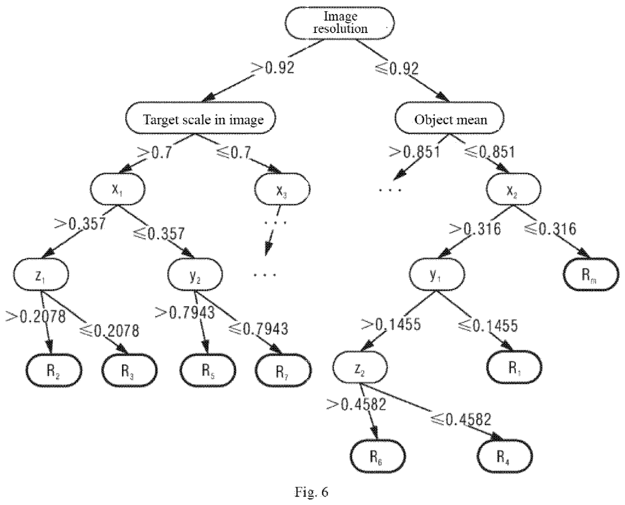

For example, as shown in Fig. 6, we use a decision tree as a learning algorithm to acquire knowledge from the simulation result. By applying the decision tree to training a data set, we can finally obtain the rule knowledge shown in Fig. 6. Wherein, $R_1$, $R_2$, ..., $R_m$ represent different discrete values of R. Based on the learned rule, the performance metric R can directly be obtained from $[I, x_1, x_2, x_3, y_1, y_2, z_1, z_2]$. Therefore, an acceptable or optimal performance metric R can be obtained by selecting specific values of $[I, x_1, x_2, x_3, y_1, y_2, z_1, z_2]$. The decision tree is automatically generated by the algorithm. Once data of a customer is entered, the decision tree is automatically used as a prediction model to output a prediction result.

Specifically, the decision tree shown in Fig. 6 is generated by the machine learning algorithm which automatically trains data based on the features of the simulation task, the parameter group having different values and the performance metrics in the previous steps. As shown in Fig. 6, in the grasping robot B, the image resolution of the features of the simulation task is divided into a value range greater than 0.92 and a value range less than or equal to 0.92. When the image resolution is greater than 0.92, the target scale in the image of the features of the simulation task is divided into a value range greater than 0.7 and a value range less than or equal to 0.7. When the image resolution is less than or equal to 0.92, the object mean of the features of the simulation task is divided into a value range greater than 0.851 and a value range less than or equal to 0.851. Further, when the target scale in an image is greater than 0.7, continue to divide $x_1$ into a value range greater than 0.357 and a value range less than or equal to 0.357, and when the target scale in an image is less than or equal to 0.7, continue to determine $x_3$. When $x_1$ is greater than 0.357, determine $z_1$. When $z_1$ is greater than 0.2078, obtain the performance metric $R_2$, and when $z_1$ is less than or equal to 0.2078, obtain the performance metric $R_3$. When $x_1$ is less than or equal to 0.357, determine $y_2$. When $y_2$ is greater than 0.7943, obtain the performance metric $R_5$, and when $y_2$ is less than or equal to 0.7943, obtain the performance metric $R_7$. Further, when the object mean is less than or equal to 0.851, divide $x_2$ into a value range greater than 0.316 and a value range less than or equal to 0.316. When $x_2$ is greater than 0.316, determine $y_1$. When $y_1$ is greater than 0.1455, divide $z_2$ into a value range greater than 0.4582 and a value range less than or equal to 0.4582. When $z_2$ is greater than 0.4582, obtain the performance metric $R_6$, when $z_2$ is less than or equal to 0.4582, obtain the performance metric $R_4$, when $y_1$ is less than or equal to 0.1455, obtain the performance metric $R_1$, and when $x_2$ is less than or equal to 0.316, obtain the performance metric $R_m$.

Therefore, after step S4, the following step is further comprised: querying the prediction model based on the features of the input simulation task and the values of the parameter groups to obtain the values of the performance metrics. For example, in the embodiment of the grasping robot B, the customer enters the simulation task feature I and the parameter groups x, y and z. Therefore, when querying the decision tree shown in Fig. 6, the customer can obtain the values of corresponding performance metrics and the customer make a determination based on the prediction model.

In a second aspect, the present invention provides a prediction model learning apparatus for an industrial system, wherein a simulation is performed for the industrial system according to a simulation task on a platform. The prediction model learning apparatus for an industrial system comprises: a task feature management unit, configured to use statistical metrics to quantify a simulation task of the industrial system so as to extract features of the simulation task, a parameter adjustment management unit, configured to extract parameter groups from system modules of the industrial system which performs a simulation, adjust the values of the parameter groups, and trigger a simulation for the industrial system on the simulation platform based on a plurality of parameter groups having different values, a performance recording unit, configured to record performance metrics according to the values of the parameter groups after the parameter adjustment, a training data management unit, configured to train data by use of a machine learning algorithm based on the features of the simulation task, the corresponding parameter groups having different values and the performance metrics, and a learning management unit, configured to generate a prediction model.

Further, the parameter adjustment management unit further comprises a parameter feature group recording subunit, configured to extract parameter groups from system modules of the industrial system which performs a simulation, and mark adjustable parameter groups, a parameter adjustment subunit, configured to adjust the values of the adjustable parameter groups according to the corresponding adjustable range of each adjustable parameter group, and trigger a simulation for the industrial system on the simulation platform based on a plurality of parameter groups having different values; and a parameter recording subunit, configured to synchronize and record the combination and values of the parameter groups after the parameter adjustment.

Further, the performance recording unit further comprises a performance registration sub-unit, configured to record performance metrics according to the values of the parameter groups after the parameter adjustment, and a performance recording subunit, configured to record the values of the performance metrics based on the recorded performance metrics and the simulation result which correspond to each other.

Further, the performance metrics are key performance indexes or are determined based on the customer requirements.

Further, the learning management unit is configured to query the prediction model based on the features of the input simulation task and the values of the parameter groups to obtain the values of the performance metrics.

In a third aspect, the present invention provides a prediction model learning system for an industrial system. The prediction model learning system for an industrial system comprises a processor and a memory coupled with the processor, the memory has instructions stored therein, the instructions allow the prediction model learning system for an industrial system to perform actions when executed by the processor, and the actions include: S1, using statistical metrics to quantify a simulation task of the industrial system so as to extract features of the simulation task; S2, extracting parameter groups from system modules of the industrial system which performs a simulation, adjusting the values of the parameter groups, and triggering a simulation for the industrial system on the simulation platform based on a plurality of parameter groups having different values; S3, recording performance metrics according to the values of the parameter groups after the parameter adjustment; S4, training data by use of a machine learning algorithm based on the features of the simulation task, the corresponding parameter groups having different values and the performance metrics, and generating a prediction model.

Further, action S2 further comprises: S21, extracting parameter groups from system modules of the industrial system which performs a simulation, and marking adjustable parameter groups; S22, adjusting the values of the adjustable parameter groups according to the corresponding adjustable range of each adjustable parameter group, and triggering a simulation for the industrial system on the simulation platform based on a plurality of parameter groups having different values; S23, synchronizing and recording the combination and values of the parameter groups after the parameter adjustment.

Further, action S3 comprises: S31, recording performance metrics according to the values of the parameter groups after the parameter adjustment; S32, recording the values of the performance metrics based on the recorded performance metrics and the simulation result which correspond to each other.

Further, the actions after action S4 include: querying the prediction model based on the features of the input simulation task and the values of the parameter groups to obtain the values of the performance metrics.

In a fourth aspect, the present invention provides a computer program product, the computer program product is tangibly stored in a computer-readable medium and comprises computer-executable instructions, and the computer-executable instructions allow at least one processor to execute the method according to the first aspect of the present invention when executed.

In a fifth aspect, the present invention provides a computer-readable medium, computer-executable instructions are stored in the computer-readable medium, and the computer-executable instructions allow at least one processor to execute the method according to the first aspect of the present invention when executed.

Data in the simulation task is used to train and build a prediction model in the present invention. The step of adjusting parameters in the present invention is a systematic and automatic step, allowing a simulation to produce a large amount of various parameters for data training. Parameter adjustments are often manually completed in the prior art, however. Therefore, those system parameters can be structurally explored and tested, avoiding incomplete considerations in manual parameter adjustment mode.

By use of the present invention, simulation data can be converted into an online prediction model, which can direct a user to dynamically and more efficiently select a parameter combination and values for a complicated system. When a simulation is performed for an industrial system, the present invention may simultaneously help a customer to establish an online prediction system. The present invention allows industrial customers to online predict the performance of their systems and dynamically adjust parameters.

Although the content of the present invention has been described in detail through the above-mentioned embodiments, the description above should not be considered as a restriction of the present invention. Therefore, the scope of protection of the present invention should be defined by the attached claims. In addition, any reference numeral in the claims should not be considered a restriction of the claims, the term "comprise" does not exclude other devices or steps not listed in the claims or the description, and the terms "first" and "second" are only used to represent a name, but not to represent any specific sequence.

**EP 4 122 654 B1**

**Claims**

1. A computer implemented prediction model learning method for an industrial system, wherein a simulation is performed on a simulation platform (200) for simulating the industrial system according to a first simulation task, and the prediction model learning method for an industrial system comprises steps of:

   S1) using statistical metrics to quantify a first simulation task of the industrial system so as to extract features of the first simulation task;
   S2) extracting parameter groups from system modules of the simulation platform which perform a simulation of the industrial system, adjusting the values of the parameter groups, and triggering a simulation for the industrial system on the simulation platform based on a plurality of parameter groups having different values, wherein the step of extracting S2) comprises steps of:

      S21) extracting parameter groups from system modules of the industrial system which performs a simulation, and marking adjustable parameter groups;
      S22) adjusting the values of the adjustable parameter groups according to a corresponding adjustable range of each adjustable parameter group, and triggering a simulation for the industrial system on the simulation platform (200) based on a plurality of parameter groups having different values;
      S23) synchronizing and recording the combination and values of the parameter groups after the parameter adjustment;

   S3) recording performance metrics according to the values of the parameter groups after the parameter adjustment, wherein the performance metrics are performance metrics of the industrial system serving as a simulation target;
   S4) training a prediction model by using of a machine learning algorithm and inputting into the machine learning algorithm the features of the first simulation task, the corresponding parameter groups having different values and the performance metrics,
   S5) querying the trained prediction model based on a second input simulation task.

2. The prediction model learning method for an industrial system as claimed in claim 1, wherein step S3) further comprises the steps of:

   S31) recording performance metrics according to the values of the parameter groups after the parameter adjustment;
   S32) recording the values of the performance metrics based on the recorded performance metrics and the simulation result which correspond to each other.

3. The prediction model learning method for an industrial system as claimed in claim 2, wherein the performance metrics are key performance indexes or are determined based on the customer requirements.

4. The prediction model learning method for an industrial system as claimed in claim 1, wherein after the training step S4), the method further comprises a step of: querying the prediction model based on the features of the input simulation task and the values of the parameter groups to obtain the values of the performance metrics.

5. The prediction model learning method for an industrial system as claimed in claim 4, wherein the industrial system is a context-aware robot, wherein the features of the simulation task include a plurality of metrics of a red-green-blue-depth, RGBD, image, and the metrics include one or more of the following:

   - image resolution;
   - target scale in image;
   - object mean.

6. The prediction model learning method for an industrial system as claimed in claim 5, wherein the context-aware robot is a grasping robot and the system modules thereof include:

   a vision module, configured to process an input RGBD image;
   a path planning module, configured to figure out the path along which the manipulator moves to a grasping point according to the grasping point obtained through image recognition;

an action control module, configured to control the movement of the manipulator according to the path planned by the path planning module.

7. A prediction model learning system for an industrial system, comprising:

a processor; and
a memory coupled with the processor, the memory having instructions stored therein, the instructions allowing the prediction model learning system for an industrial system to perform actions when executed by the processor, and the actions including:

S1) using statistical metrics to quantify a first simulation task of the industrial system so as to extract features of the first simulation task;
S2) extracting parameter groups from system modules of a simulation platform which perform a simulation of the industrial system, adjusting the values of the parameter groups, and triggering a simulation for the industrial system on the simulation platform based on a plurality of parameter groups having different values, wherein the action of extracting S2) further comprises:

S21) extracting parameter groups from system modules of the industrial system which performs a simulation, and marking adjustable parameter groups;
S22) adjusting the values of the adjustable parameter groups according to the corresponding adjustable range of each adjustable parameter group, and triggering a simulation for the industrial system on the simulation platform based on a plurality of parameter groups having different values;
S23) synchronizing and recording the combination and values of the parameter groups after the parameter adjustment;

S3) recording performance metrics according to the values of the parameter groups after the parameter adjustment;
S4) training a prediction model by using of a machine learning algorithm and inputting into the machine learning algorithm the features of the first simulation task, the corresponding parameter groups having different values and the performance metrics, and generating a prediction model; and
S5) querying the trained prediction model based on a second input simulation task.

8. The prediction model learning system for an industrial system as claimed in claim 7, wherein step S3) further comprises:

S31) recording performance metrics according to the values of the parameter groups after the parameter adjustment, wherein the performance metrics are performance metrics of the industrial system serving as a simulation target;
S32) recording the values of the performance metrics based on the recorded performance metrics and the simulation result which correspond to each other.

9. The prediction model learning system for an industrial system as claimed in claim 7, wherein after the action training S4), the actions further include: querying the prediction model based on the features of the input simulation task and the values of the parameter groups to obtain the values of the performance metrics.

10. A computer program product, the computer program product being tangibly stored in a computer-readable medium and comprising computer-executable instructions, and the computer-executable instructions allowing at least one processor to execute the method as claimed in any of claims 1 to 6 when executed.

11. A computer-readable medium, computer-executable instructions being stored in the computer-readable medium, and the computer-readable instructions allowing at least one processor to execute the method as claimed in any of claims 1 to 6 when executed.

**Patentansprüche**

1. Computerimplementiertes Vorhersagemodelllernverfahren für ein Industriesystem, wobei eine Simulation zum Simulieren des Industriesystems gemäß einer ersten Simulationsaufgabe auf einer Simulationsplattform (200) durchgeführt wird und das Vorhersagemodelllernverfahren für ein Industriesystem die folgenden Schritte umfasst:

S1) Verwenden statistischer Metriken zum Quantifizieren einer ersten Simulationsaufgabe des Industriesystems, um Merkmale der ersten Simulationsaufgabe zu extrahieren;

S2) Extrahieren von Parametergruppen aus Systemmodulen der Simulationsplattform, die eine Simulation des Industriesystems durchführen, Anpassen der Werte der Parametergruppen und Auslösen einer Simulation für das Industriesystem auf der Simulationsplattform basierend auf mehreren Parametergruppen mit unterschiedlichen Werten, wobei der Schritt des Extrahierens S2) die folgenden Schritte umfasst:

S21) Extrahieren von Parametergruppen aus Systemmodulen des Industriesystems, die eine Simulation durchführen, und Markieren anpassbarer Parametergruppen;

S22) Anpassen der Werte der anpassbaren Parametergruppen gemäß einem entsprechenden anpassbaren Bereich jeder anpassbaren Parametergruppe und Auslösen einer Simulation für das Industriesystem auf der Simulationsplattform (200) basierend auf mehreren Parametergruppen mit unterschiedlichen Werten;

S23) Synchronisieren und Aufzeichnen der Kombination und der Werte der Parametergruppen nach der Parameteranpassung;

S3) Aufzeichnen von Leistungsfähigkeitsmetriken gemäß den Werten der Parametergruppen nach der Parameteranpassung, wobei die Leistungsfähigkeitsmetriken Leistungsfähigkeitsmetriken des Industriesystems sind, die als ein Simulationsziel dienen;

S4) Trainieren eines Vorhersagemodells unter Verwendung eines Maschinenlernalgorithmus und Eingeben der Merkmale der ersten Simulationsaufgabe in den Maschinenlernalgorithmus, wobei die entsprechenden Parametergruppen unterschiedliche Werte und die Leistungsfähigkeitsmetriken aufweisen,

S5) Abfragen des trainierten Vorhersagemodells basierend auf einer zweiten eingegebenen Simulationsaufgabe.

2. Vorhersagemodelllernverfahren für ein Industriesystem nach Anspruch 1, wobei Schritt S3) ferner die folgenden Schritte umfasst:

S31) Aufzeichnen von Leistungsfähigkeitsmetriken gemäß den Werten der Parametergruppen nach der Parameteranpassung;

S32) Aufzeichnen der Werte der Leistungsfähigkeitsmetriken basierend auf den aufgezeichneten Leistungsfähigkeitsmetriken und dem Simulationsergebnis, die einander entsprechen.

3. Vorhersagemodelllernverfahren für ein Industriesystem nach Anspruch 2, wobei die Leistungsfähigkeitsmetriken Schlüsselleistungsindizes sind oder basierend auf den Kundenanforderungen bestimmt werden.

4. Vorhersagemodelllernverfahren für ein Industriesystem nach Anspruch 1, wobei das Verfahren nach dem Trainingsschritt S4) ferner folgenden Schritt umfasst: Abfragen des Vorhersagemodells basierend auf den Merkmalen der eingegebenen Simulationsaufgabe und den Werten der Parametergruppen, um die Werte der Leistungsfähigkeitsmetriken zu erhalten.

5. Vorhersagemodelllernverfahren für ein Industriesystem nach Anspruch 4, wobei das Industriesystem ein kontextbewusster Roboter ist, wobei die Merkmale der Simulationsaufgabe mehrere Metriken eines Rot-Grün-Blau-Tiefenbzw. RGBD-Bildes beinhalten und die Metriken eines oder mehrere aus Folgendem beinhalten:

- Bildauflösung;
- Zielskala im Bild;
- Objektmittelwert.

6. Vorhersagemodelllernverfahren für ein Industriesystem nach Anspruch 5, wobei der kontextbewusste Roboter ein Greifroboter ist und die Systemmodule davon Folgendes beinhalten:

ein Visionsmodul, das dazu ausgelegt ist, ein eingegebenes RGBD-Bild zu verarbeiten;

ein Pfadplanungsmodul, das dazu ausgelegt ist, den Pfad, entlang dem sich der Manipulator zu einem Greifpunkt bewegt, gemäß dem Greifpunkt, der durch Bilderkennung erhalten wird, herauszufinden;

ein Aktionssteuermodul, das dazu ausgelegt ist, die Bewegung des Manipulators gemäß dem durch das Pfadplanungsmodul geplanten Pfad zu steuern.

7. Vorhersagemodelllernsystem für ein Industriesystem, das Folgendes umfasst:

   einen Prozessor; und
   einen Speicher, der mit dem Prozessor gekoppelt ist, wobei der Speicher darin gespeicherte Anweisungen aufweist, wobei die Anweisungen dem Vorhersagemodelllernsystem für ein Industriesystem ermöglichen, Aktionen durchzuführen, wenn sie durch den Prozessor ausgeführt werden, und die Aktionen Folgendes beinhalten:

   S1) Verwenden statistischer Metriken zum Quantifizieren einer ersten Simulationsaufgabe des Industriesystems, um Merkmale der ersten Simulationsaufgabe zu extrahieren;
   S2) Extrahieren von Parametergruppen aus Systemmodulen der Simulationsplattform, die eine Simulation des Industriesystems durchführen, Anpassen der Werte der Parametergruppen und Auslösen einer Simulation für das Industriesystem auf der Simulationsplattform basierend auf mehreren Parametergruppen mit unterschiedlichen Werten, wobei die Aktion des Extrahierens S2) ferner Folgendes umfasst:

   S21) Extrahieren von Parametergruppen aus Systemmodulen des Industriesystems, die eine Simulation durchführen, und Markieren anpassbarer Parametergruppen;
   S22) Anpassen der Werte der anpassbaren Parametergruppen gemäß dem entsprechenden anpassbaren Bereich jeder anpassbaren Parametergruppe und Auslösen einer Simulation für das Industriesystem auf der Simulationsplattform basierend auf mehreren Parametergruppen mit unterschiedlichen Werten;
   S23) Synchronisieren und Aufzeichnen der Kombination und der Werte der Parametergruppen nach der Parameteranpassung;
   S3) Aufzeichnen von Leistungsfähigkeitsmetriken gemäß den Werten der Parametergruppen nach der Parameteranpassung;
   S4) Trainieren eines Vorhersagemodells unter Verwendung eines Maschinenlernalgorithmus und Eingeben der Merkmale der ersten Simulationsaufgabe in den Maschinenlernalgorithmus, wobei die entsprechenden Parametergruppen unterschiedliche Werte und die Leistungsfähigkeitsmetriken aufweisen, und Erzeugen eines Vorhersagemodells; und
   S5) Abfragen des trainierten Vorhersagemodells basierend auf einer zweiten eingegebenen Simulationsaufgabe.

8. Vorhersagemodelllernsystem für ein Industriesystem nach Anspruch 7, wobei Schritt S3) ferner Folgendes umfasst:

   S31) Aufzeichnen von Leistungsfähigkeitsmetriken gemäß den Werten der Parametergruppen nach der Parameteranpassung, wobei die Leistungsfähigkeitsmetriken Leistungsfähigkeitsmetriken des Industriesystems sind, die als ein Simulationsziel dienen;
   S32) Aufzeichnen der Werte der Leistungsfähigkeitsmetriken basierend auf den aufgezeichneten Leistungsfähigkeitsmetriken und dem Simulationsergebnis, die einander entsprechen.

9. Vorhersagemodelllernsystem für ein Industriesystem nach Anspruch 7, wobei die Aktionen nach dem Aktionstraining S4) ferner Folgendes beinhalten: Abfragen des Vorhersagemodells basierend auf den Merkmalen der eingegebenen Simulationsaufgabe und den Werten der Parametergruppen, um die Werte der Leistungsfähigkeitsmetriken zu erhalten.

10. Computerprogrammprodukt, wobei das Computerprogrammprodukt greifbar in einem computerlesbaren Medium gespeichert ist und computerausführbare Anweisungen umfasst, und wobei die computerausführbaren Anweisungen, wenn sie ausgeführt werden, mindestens einem Prozessor ermöglichen, das Verfahren nach einem der Ansprüche 1 bis 6 auszuführen.

11. Computerlesbares Medium, wobei computerausführbare Anweisungen in dem computerlesbaren Medium gespeichert sind und die computerlesbaren Anweisungen, wenn sie ausgeführt werden, mindestens einem Prozessor ermöglichen, das Verfahren nach einem der Ansprüche 1 bis 6 auszuführen.

**Revendications**

1. Procédé d'apprentissage de modèle de prédiction mis en œuvre par ordinateur pour un système industriel, dans lequel une simulation est réalisée sur une plateforme de simulation (200) pour simuler le système industriel selon une première tâche de simulation, et le procédé d'apprentissage de modèle de prédiction pour un système industriel comprend des étapes consistant à :

S1) utiliser des métriques statistiques pour quantifier une première tâche de simulation du système industriel afin d'extraire des caractéristiques de la première tâche de simulation ;

S2) extraire des groupes de paramètres de modules de système de la plateforme de simulation qui réalisent une simulation du système industriel, ajuster les valeurs des groupes de paramètres, et déclencher une simulation pour le système industriel sur la plateforme de simulation sur la base d'une pluralité de groupes de paramètres ayant des valeurs différentes, l'étape d'extraction S2) comprenant des étapes consistant à :

S21) extraire des groupes de paramètres des modules de système du système industriel qui réalise une simulation, et marquer des groupes de paramètres ajustables ;

S22) ajuster les valeurs des groupes de paramètres ajustables selon une plage ajustable correspondante de chaque groupe de paramètres ajustable, et déclencher une simulation pour le système industriel sur la plateforme de simulation (200) sur la base d'une pluralité de groupes de paramètres ayant des valeurs différentes ;

S23) synchroniser et enregistrer la combinaison et les valeurs des groupes de paramètres après l'ajustement de paramètres ;

S3) enregistrer des métriques de performance selon les valeurs des groupes de paramètres après l'ajustement de paramètres, les métriques de performance étant des métriques de performance du système industriel servant de cible de simulation ;

S4) entraîner un modèle de prédiction en utilisant un algorithme d'apprentissage machine et entrer dans l'algorithme d'apprentissage machine les caractéristiques de la première tâche de simulation, les groupes de paramètres correspondants ayant des valeurs différentes et les métriques de performance,

S5) interroger le modèle de prédiction entraîné sur la base d'une seconde tâche de simulation d'entrée.

2. Procédé d'apprentissage de modèle de prédiction pour un système industriel selon la revendication 1, dans lequel l'étape S3) comprend en outre les étapes consistant à :

S31) enregistrer des métriques de performance selon les valeurs des groupes de paramètres après l'ajustement de paramètres ;

S32) enregistrer les valeurs des métriques de performance sur la base des métriques de performance enregistrées et du résultat de simulation qui correspondent les uns aux autres.

3. Procédé d'apprentissage de modèle de prédiction pour un système industriel selon la revendication 2, dans lequel les métriques de performance sont des indices de performance clés ou sont déterminées sur la base des exigences du client.

4. Procédé d'apprentissage de modèle de prédiction pour un système industriel selon la revendication 1, dans lequel après l'étape d'entraînement S4), le procédé comprend en outre une étape consistant à : interroger le modèle de prédiction sur la base des caractéristiques de la tâche de simulation d'entrée et des valeurs des groupes de paramètres pour obtenir les valeurs des métriques de performance.

5. Procédé d'apprentissage de modèle de prédiction pour un système industriel selon la revendication 4, dans lequel le système industriel est un robot conscient du contexte, dans lequel les caractéristiques de la tâche de simulation incluent une pluralité de métriques d'une image RGBD, rouge-vert-bleu, et les métriques incluent un ou plusieurs des éléments suivants :

- résolution d'image ;
- échelle cible dans l'image ;
- moyenne objet.

6. Procédé d'apprentissage de modèle de prédiction pour un système industriel selon la revendication 5, dans lequel le robot conscient du contexte est un robot de saisie et ses modules de système incluent :

un module de vision, configuré pour traiter une image RGBD d'entrée ;
un module de planification de trajectoire, configuré pour figurer la trajectoire le long de laquelle le manipulateur se déplace vers un point de saisie selon le point de saisie obtenu par reconnaissance d'image ;
un module de commande d'action, configuré pour commander le déplacement du manipulateur selon la trajectoire planifiée par le module de planification de trajectoire.

7. Système d'apprentissage de modèle de prédiction pour un système industriel, comprenant :

   un processeur ; et
   une mémoire couplée avec le processeur, la mémoire contenant des instructions stockées dans celle-ci, les instructions permettant au système d'apprentissage de modèle de prédiction pour un système industriel de réaliser des actions lorsqu'elles sont exécutées par le processeur, et les actions incluant :

   S1) l'utilisation de métriques statistiques pour quantifier une première tâche de simulation du système industriel afin d'extraire des caractéristiques de la première tâche de simulation ;
   S2) l'extraction de groupes de paramètres de modules de système d'une plateforme de simulation qui réalisent une simulation du système industriel, l'ajustement des valeurs des groupes de paramètres, et le déclenchement d'une simulation pour le système industriel sur la plateforme de simulation sur la base d'une pluralité de groupes de paramètres ayant des valeurs différentes, l'action d'extraction de S2) comprenant en outre :

   S21) l'extraction de groupes de paramètres de modules du système industriel qui réalise une simulation, et le marquage de groupes de paramètres ajustables ;
   S22) l'ajustement des valeurs des groupes de paramètres ajustables selon la plage ajustable correspondante de chaque groupe de paramètres ajustable, et le déclenchement d'une simulation pour le système industriel sur la plateforme de simulation sur la base d'une pluralité de groupes de paramètres ayant des valeurs différentes ;
   S23) la synchronisation et l'enregistrement de la combinaison et des valeurs des groupes de paramètres après l'ajustement de paramètres ;
   S3) l'enregistrement de métriques de performance selon les valeurs des groupes de paramètres après l'ajustement de paramètres ;
   S4) l'entraînement d'un modèle de prédiction en utilisant un algorithme d'apprentissage machine et l'entrée dans l'algorithme d'apprentissage machine les caractéristiques de la première tâche de simulation, les groupes de paramètres correspondants ayant des valeurs différentes et des métriques de performance, et la génération d'un modèle de prédiction ; et
   S5) l'interrogation du modèle de prédiction entraîné sur la base d'une seconde tâche de simulation d'entrée.

8. Système d'apprentissage de modèle de prédiction pour un système industriel selon la revendication 7, dans lequel l'étape S3) comprend en outre :

   S31) l'enregistrement de métriques de performance selon les valeurs des groupes de paramètres après l'ajustement de paramètres, les métriques de performance étant des métriques de performance du système industriel servant de cible de simulation ;
   S32) l'enregistrement des valeurs des métriques de performance sur la base des métriques de performance enregistrées et le résultat de simulation qui correspondent les uns aux autres.

9. Système d'apprentissage de modèle de prédiction pour un système industriel selon la revendication 7, dans lequel après l'action d'entraînement S4), les actions incluent en outre : l'interrogation du modèle de prédiction sur la base des caractéristiques de la tâche de simulation d'entrée et les valeurs des groupes de paramètres pour obtenir les valeurs des métriques de performance.

10. Produit de programme informatique, le produit de programme informatique étant stocké de manière tangible dans un support lisible par ordinateur et comprenant des instructions exécutables par ordinateur, et les instructions exécutables par ordinateur permettant à l'au moins un processeur d'exécuter le procédé selon l'une quelconque des revendications 1 à 6 lorsqu'elles sont exécutées.

11. Support lisible par ordinateur, des instructions exécutables par ordinateur étant stockées dans le support lisible par ordinateur, et les instructions lisibles par ordinateur permettant à au moins un processeur d'exécuter le procédé selon l'une quelconque des revendications 1 à 6 lorsqu'elles sont exécutées.

100

200

Simulation task

| 210 | → | 220 | → | 230 |

Simulation result

Parameter adjustment    Parameter group    Parameter adjustment

| 110 | ↔ | 120 | ↔ | 130 |

Combination and value of parameter group

Performance metrics and values

Features of simulation task

| 140 |

| 150 |

Fig. 1

Fig. 2

Fig. 3

$$X_1 = X_{1min}, X_2 = X_{2min}, X_3 = X_{3min},$$
$$y_1 = y_{11}, y_2 = y_{21},$$
$$Z_1 = Z_{1min}, Z_2 = Z_{2min}$$

Is enumerating values from $X_{1min}$ to $X_{1max}$ completed?

No

$$X_1 = X_1 + \Delta X_1$$    Yes

Is enumerating values from $X_{2min}$ to $X_{2max}$ completed?

No

$$X_2 = X_2 + \Delta X_2$$

Yes    No

Is enumerating values from $X_{3min}$ to $X_{3max}$ completed?

No

$$X_3 = X_3 + \Delta X_3$$

Is enumerating values from $y_{11}$ to $y_{13}$ completed?

No

Yes    Is $y_1$ the next value from $y_{11}$ to $y_{13}$?

Is enumerating values from $y_{21}$ to $y_{23}$ completed?

No

$y_2$ is the next value from $y_{21}$ to $y_{23}$

Is enumerating values from $Z_{1min}$ to $Z_{1max}$ completed?

No

$$Z_1 = Z_1 + \Delta Z_1$$    Yes

Yes

Is enumerating values from $Z_{2min}$ to $Z_{2max}$ completed?

No

$$Z_2 = Z_2 + \Delta Z_2$$

Send the parameters after the parameter adjustment to the simulation platform 200

Complete the parameter adjustment

Fig. 4

19

Fig. 5

Fig. 6

# EP 4 122 654 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109800864 A